# EUROPEAN PATENT SPECIFICATION

(11) **EP 2 774 858 B1**
(45) Date of publication and mention of the grant of the patent: **09.12.2015**
(21) Application number: 14000765.9
(22) Date of filing: 04.03.2014
(51) Int. Cl.: B65B 31/04, B65B 43/46, B65B 43/36, B65B 51/14, B65B 3/04

(54) **Gas charging method and gas charging apparatus for a bag equipped with gas compartment portion**
Gaszuführungsverfahren und Gaszuführungssvorrichtung für einen Beutel mit Gasraumabschnitt
Procédé de chargement en gaz et appareil de chargement de gaz destiné à un sac équipé d'un compartiment à gaz

(30) Priority: 05.03.2013 JP 2013042780
(43) Date of publication of application: 10.09.2014
(73) Proprietor: Toyo Jidoki Co., Ltd., Tokyo (JP)
(72) Inventor: Yoshikane, Tohru, Iwakuni-shi Yamaguchi (JP); Sunouchi, Norikazu, Toyonaka-shi Osaka (JP); Kawamura, Kenji, Iwakuni-shi Yamaguchi (JP)
(74) Representative: Schubert, Siegmar

(56) References cited:
- WO-A1-2009/041911
- WO-A1-2010/069428
- JP-A- 2007 118 961

## Description

### BACKGROUND OF THE INVENTION

### I. Field of the Invention

The present invention relates to a method and apparatus for charging a gas into a bag and more particularly to a method and apparatus for charging a gas into a gas compartment portion provided in a sealed side edge portion of a bag.

### 2. Description of the Related Art

Japanese Patent No. 4,771,785 describes a method in which a bag having therein an integrally formed gas compartment portion extending in the longitudinal direction in a sealed side edge portion of the bag is intermittently conveyed along a predetermined bag conveying path, and the gas compartment portion is charged with gas while the bag is being conveyed.

More specifically in this gas filing method of Japanese Patent No. 4,771,785 or JP-A-2007 118 961, a bag, in which an incision or an opening (collectively called "gas inlet") that places the exterior of the bag in communication with the interior of the gas compartment portion is formed in a film sheet constituting the gas compartment portion, is used; and this gas compartment portion is charged with gas by aligning the discharge outlet of a gas injection nozzle connected to a pressurized gas supply source with the gas inlet by injecting a gas from the gas injection nozzle into the gas compartment portion through the incision or opening at a predetermined stop position along the bag conveying path. While the injection is in progress, a blockage region in the vicinity of the gas inlet is gripped by a gas blocking gripper on both sides of the bag so that fluid communication of gas between the gas inlet and the interior of the gas compartment portion is blocked (gas filling step), then the bag equipped with a gas compartment portion, while the gas blocking gripper clamping the blockage region, is conveyed to a downstream stop position along the bag conveying path, and then the bag is pressure-held by hot plates on both sides at the location of the gas inlet, and the gas inlet is sealed, thus encapsulating the gas in the gas compartment portion (gas charging step).

In the method of Japanese Patent No. 4,771,785, the charging of the gas compartment portion with gas can be accomplished as part of bag packaging step. More specifically, in this method, a bag equipped with a gas compartment portion is intermittently conveyed in a suspended state with its two lateral edges clamped by grippers; and while it is being conveyed, various packaging steps, including opening the mouth of the bag, filling the bag with the material to be packaged, sealing the mouth of the bag, etc., are successively carried out; and the step of filling the gas compartment portion with gas and the step of sealing are carried out after the step of filling the bag with the material to be packaged. If the gas compartment portion of the bag extends downwardly from the vicinity of the upper edge of the bag, and the gas inlet is formed in the vicinity of the upper edge of the gas compartment portion, the entire mouth of the bag can be sealed from both sides simultaneously together with sealing of the gas inlet using the hot plates.

The method of Japanese Patent No. 5,104,073 is for a bag in which the gas compartment portion to be charged with gas through an incision or opening (collectively called "gas inlet") formed at the upper edge of the gas compartment portion of a sealed side edge portion of a bag and in which an elongated (narrow) gas filling pathway is formed in the vicinity of (directly underneath) the area where the gas inlet is formed; and gas is injected through the gas inlet into the interior of the gas compartment portion, and, while the injection is in progress, heat sealing is performed for a part of the location of the filling pathway to seal the gas in the gas compartment portion. In the gas charging method of Japanese Patent No. 5,104,073, the step of filling the gas compartment portion with gas and the gas sealing step cannot be separated from each other. Accordingly, when this method is used for, for example, an intermittently rotating rotary packaging apparatus, it is difficult to improve the productivity compared to the gas charging method of Japanese Patent No. 4,771,785.

In the gas charging method described in Japanese Patent No. 4,771,785, at a predetermined stop position along the bag conveying path, the discharge outlet of a gas injection nozzle is aligned with the gas inlet of the gas compartment portion, and compressed gas is injected into the gas compartment portion through the gas inlet. The gas injected into the gas compartment portion fills the gas compartment portion, causing the gas compartment portion to expand.

However, in a bag equipped with a gas compartment portion, static electricity may sometimes cause adhesion of the front and rear film sheets that constitute the gas compartment portion. The problem that arises in such a case is that the gas compartment portion cannot be smoothly filled with gas, and as a result the amount of gas that fills the gas compartment portion is small, causing the expansion of the gas compartment portion to be insufficient, and making it impossible to sufficiently increase the shape retention and self-supporting properties of the bag. This problem tends to be particularly acute for a bag in which the gas charging pathway of the gas compartment portion is made narrow (see Japanese Patent No. 5,104,073).

The inventors of the present application have found that even when the front and rear film sheets of the gas compartment portion adhere under the action of static electricity etc., the injection of compressed gas into the gas compartment portion by the gas injection nozzle causes the adhered front and rear film sheets to be separated and spread apart by the compressed gas, and the gas gradually reaches deeply into the gas compartment portion and sooner or later fills the entire gas compartment portion. Accordingly, the foregoing problem can be eliminated by increasing the time (filling time) used to inject gas into the gas compartment portion by the gas injection nozzle. However, for increasing the time for injection, it is necessary to increase the stop time of the bag equipped with a gas compartment portion while it is being intermittently conveyed, and this causes a decrease in productivity of product bags to be unavoidable.

### BRIEF SUMMARY OF THE INVENTION

It is, therefore, an object of the present invention to provide a method and apparatus that smoothly fill the gas compartment portion of a bag with gas without lowering productivity of product bags having gas compartment portions even if the front and rear film sheets that constitute the gas compartment portion are firmly adhered together by action of static electricity and the like.

The above object is accomplished by unique steps of the present invention for a method for charging a bag equipped with a gas compartment portion with gas,
wherein the method is for a bag formed integrally therein with a gas compartment portion extending in the longitudinal direction in a sealed side edge portion of the bag and having an incision or an opening (collectively called "gas inlet") that is formed in a film sheet constituting the gas compartment portion of the bag and places the exterior of the bag in communication with the interior of the gas compartment portion, and the bag is conveyed along a predetermined bag conveying path, and
wherein the method, while the bag is on the bag conveying path, carries out a gas filling step and subsequently a gas charging step, in which:
in the gas filling step, the discharge outlet of a gas injection nozzle connected to a pressurized gas supply source is aligned with the gas inlet, gas is injected from the gas injection nozzle into the gas compartment portion of the bag through the gas inlet, and, while the injection is in progress, a blockage region configured in the vicinity of the gas inlet is gripped by a gas blocking gripper on both sides of the bag to block fluid communication of gas between the gas inlet and the interior of the gas compartment portion; and
in the gas charging step, the bag, with the blockage region being clamped by the gas blocking gripper, is pressure-held on both sides at the location of the gas inlet or at a location in the vicinity of the gas inlet by hot plates to thereby seal the gas inlet or an area in the vicinity of the gas inlet, thus encapsulating the gas in the gas compartment portion, and
wherein prior to the gas filling step, the method carries out a preliminary gas injection step that, while the bag is being on the bag conveying path, aligns the discharge outlet of another (or preliminary) gas injection nozzle connected to a pressurized gas supply source with the gas inlet of the gas compartment portion of the bag and injects gas from the other (preliminary) gas injection nozzle into the gas compartment portion through the gas inlet.

The above-described gas charging method of the present invention is applicable not only to a case in which bags equipped with gas compartment portions are conveyed along a predetermined bag conveying path in an intermittent manner (see embodiments described in Japanese Patent No. 4,771,785) but also to a case in which bags equipped with gas compartment portions are conveyed in a continuous manner along a predetermined bag conveying path at a constant speed. In a case that the bags equipped with gas compartment portions are conveyed in an intermittent manner, the gas filling step can be carried out at a predetermined stop position along the bag conveying path, and, with the gas blocking gripper still clamping the blockage region, the bag is conveyed to a downstream stop position along the bag conveying path, and the gas charging step is carried out in the same position, and the preliminary gas injection step is carried out in a stop position that is upstream of the stop position for the gas filling step.

In the above-described gas charging method of the present invention, if necessary, a pre-heating step that blows heated gas to the gas compartment portion of the bag, which is on the bag conveying path, can be carried out before the preliminary injection step is performed.

In addition, as described in Japanese Patent No. 4,771,785, as far as the gas injection means used in the gas filling step and in the preliminary injection step are concerned, a receiving member can be provided in a position opposite from the gas injection nozzle so that the receiving member and the gas injection nozzle sandwich the gas compartment portion and the receiving member supports the rear side of the gas compartment portion during gas injection by the gas injection nozzle. In addition, when the gas inlet is formed in both front and rear film sheets of the gas compartment portion, two gas injection nozzles can be provided so as to face each other on the opposite sides of the gas compartment portion of a bag so that the bag is sandwiched by them. In this structure, the two gas injection nozzles area aligned with the respective gas inlets in the front and rear surfaces of the gas compartment portion, and gas is injected into the gas compartment portion by the two gas injection nozzles.

As described in Japanese Patent No. 4,771,785, the above-described gas charging method can be carried out as part of a bag packaging step. In other words, when a bag equipped with a gas compartment portion is intermittently conveyed in a suspended state along a bag conveying path, with its two lateral edges being held by a pair of left and right grippers, and, while it is being conveyed, various packaging steps, including opening the mouth of the bag, filling the bag with the material to be packaged, sealing the mouth of the bag, and the like, are successively carried out, the steps of the above-described gas charging method (in particular, the preliminary injection step, gas filling step, and gas charging step) are added, for example, after the step of filling the bag with the material to be packaged. If, in this case, the gas compartment portion extends downwardly from the vicinity of the upper edge of the bag and the gas inlet is formed near the upper edge of the gas compartment portion, the sealing of the mouth of the bag for its entirety from both front and rear sides and the sealing of the gas inlet or an area in the vicinity of the gas inlet to encapsulate the gas in the gas compartment portion can be performed simultaneously by the common hot plates.

In addition, the steps (the preliminary injection step, gas filling step, and gas charging step) of the above-described gas charging method can be carried out before the step of filling the bag with the material to be packaged (preferably before the bag mouth-opening step) or, alternatively, the steps can be carried out as a separate gas charging process, and not as part of the packaging step. In such cases, when gas is encapsulated in the gas compartment portion by sealing the gas inlet or an area in the vicinity of the gas inlet by the hot plates, bag mouth sealing is not performed.

The above-described object is further accomplished by a unique structure of the present invention for an apparatus for charging a bag equipped with a gas compartment portion with gas,
wherein the apparatus is for a bag integrally formed therein with a gas compartment portion that extends in the longitudinal direction in a sealed side edge portion of the bag and having an incision or an opening (collectively called "gas inlet") which is formed in a film sheet that constitutes the gas compartment portion and places the exterior of the bag in communication with the interior of the gas compartment portion, and the bag is intermittently conveyed along a predetermined bag conveying path and, while being conveyed, the gas compartment portion of the bag is charged with gas, and
wherein the apparatus comprises:
a plurality of pairs of left and right bag-conveying grippers that clamp two lateral edges of the bag equipped with a gas compartment portion and move the bag in an intermittent manner, so that the bag is intermittently conveyed along the bag conveying path;
a gas injection nozzle that is connected to a pressurized gas supply source, is provided in the vicinity of a predetermined stop position along the bag conveying path, and advances toward or retracts from the bag so that the discharge opening at a distal end of the nozzle is aligned with the gas inlet in the advanced position to inject gas through the gas inlet into the gas compartment portion;
a gas blocking gripper that is installed in conjunction with the bag-conveying grippers and moved in synchronism with the bag-conveying grippers, and, while the injection of the gas by the gas injection nozzle is in progress, the gas blocking gripper clamps a blockage region, which is configured in the vicinity of the gas inlet, on both sides of the bag to block fluid communication of gas between the gas inlet and the interior of the gas compartment portion; and
a pair of hot plates that are provided in the vicinity of a stop position downstream of the gas injection nozzle along the bag conveying path, and clamp the bag on both sides in a location of the gas inlet or a location in the vicinity of the gas inlet and seal (heat-seal) the gas inlet or an area in the vicinity of the gas inlet, thus encapsulating the gas in the gas compartment portion; and further
a preliminary gas injection nozzle that is connected to a pressurized gas supply source, is provided in the vicinity of a stop position upstream of the gas injection nozzle on the bag conveying path, and advances toward or retracts from the bag equipped with a gas compartment portion, so that the discharge opening at a distal end of the preliminary gas is aligned with the gas inlet in the advanced position, and gas is injected through the gas inlet into the gas compartment portion of the bag.

Furthermore, in the above-described gas charging apparatus, a gas blowing nozzle used for blowing heated gas to the gas compartment portion of the bag can be provided, if necessary, in the vicinity of the stop position upstream of the preliminary gas injection nozzle on the bag conveying path.

In addition, as described in Japanese Patent No. 4,771,785, the gas injection means in the above-described gas charging apparatus can be comprised of a gas injection nozzle and a receiving member that is provided opposite the gas injection nozzle, so that the gas injection nozzle and the receiving member sandwich a bag equipped with a gas compartment portion and so that the receiving member supports the rear side of the bag during gas injection done by the gas injection nozzle. In addition, when the gas inlet (incision or opening) is formed in each of the front and rear film sheets of the gas compartment portion, it can be designed so that two gas injection nozzles are provided to face each other on the opposite sides of the gas compartment portion and sandwich the gas compartment portion with the two gas injection nozzles. In this structure, the two gas injection nozzles are aligned with the respective gas inlets in the front and rear sheets, and gas is injected into the gas compartment portion by the two gas injection nozzles.

As described in Japanese Patent No. 4,771,785, the above-described gas charging apparatus can be part of a bag packaging apparatus. In this case, an ordinary packaging apparatus used to successively perform various packaging steps along the bag conveying path, such as opening the mouths of the bags equipped with gas compartment portions, filling them with the material to be packaged, sealing the mouths of the bags, and the like, is additionally provided with the members and devices used to carry out the steps of the gas charging process, such as the gas injection nozzles, and the like, in appropriate positions in the vicinity of the bag conveying path. It goes without saying that the gas charging apparatus described above can be an independent or a separate gas charging apparatus and not part of a packaging apparatus.

As seen from the above, in the present invention, a preliminary injection step is carried out before performing the gas filling step. With this preliminary injection step, compressed gas is injected into the gas compartment portion of a bag in advance. Thus, even if the front and rear film sheets of the gas compartment portion adhere to each other under the action of static electricity and the like, their adhesion can be released by this preliminary injection step (the adhered film sheets are separated and spread apart by the compressed gas injected into the gas compartment portion). Once the preliminary injection step is over, the gas injected into the gas compartment portion immediately escapes through the gas inlet (incision or opening), and the expanded gas compartment portion shrinks, assuming its original flat shape. However, due to the fact that the adhesion of the film sheets has been once released previously, the bag can be smoothly filled with gas when gas injection into the gas compartment portion is carried out again during the gas filling step. As a result, when the bag equipped with a gas compartment portion is conveyed in an intermittent manner, there is no need to increase the stop times when the bag is intermittently conveyed, and the gas compartment portion can be charged with compressed gas without loss of productivity. On the other hand, when the bag equipped with a gas compartment portion is conveyed in a continuous manner, there is no need to increase the distance for which the gas injection nozzle follows the bag.

### BRIEF DESCRIPTION OF THE SEVERAL VIEWS OF THE DRAWINGS

FIG. 1 is a schematic perspective view of a rotary packaging apparatus that includes a gas charging apparatus according to the present invention.
FIGs. 2(a) - 2(d) are side views showing a step-by-step explanation of a gas charging method of the present invention carried out by the rotary packaging apparatus of FIG. 1.
FIGs. 3(a) - 3(d) are side views showing a step-by-step explanation of the steps subsequent to the step of FIG. 2(d).
FIGs. 4(a) - 4(c) are side views showing a step-by-step explanation of the steps subsequent to the step of FIG. 3(d).
FIGs. 5(a) and 5(b) are front views showing a step-by-step explanation of a gas charging method according to the present invention carried out by the rotary packaging apparatus of FIG. 1.
FIGs. 6(a) and 6(b) are front views showing a step-by-step explanation of the steps subsequent to the step of FIG. 5(b).
FIG. 7(a) is an enlarged partial top view of the gas injection step in the present invention and FIG.7(b) is an enlarged partial front view thereof.
FIG. 8 is an enlarged partial cross-sectional top view of the operation of the bag-conveying grippers in the present invention.
FIGs. 9(a) and 9(b) are partial cross-sectional views showing a step-by-step explanation of the operation of the bag-conveying grippers.

### DETAILED DESCRIPTION OF THE INVENTION

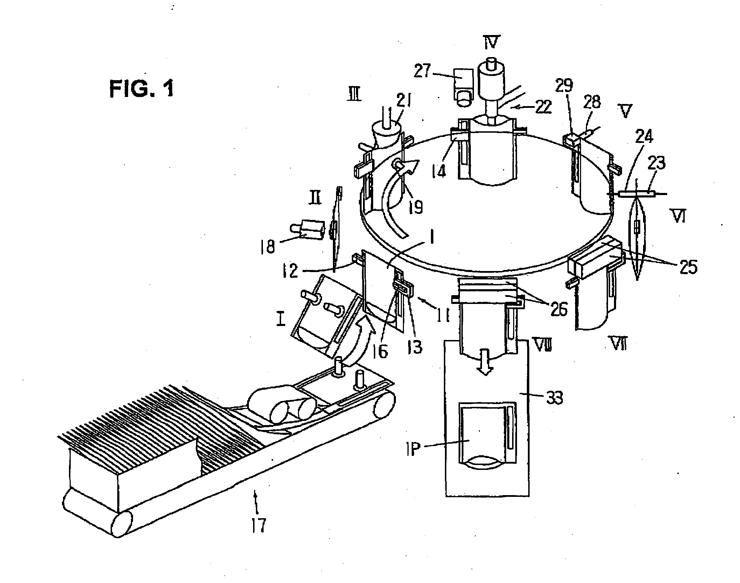

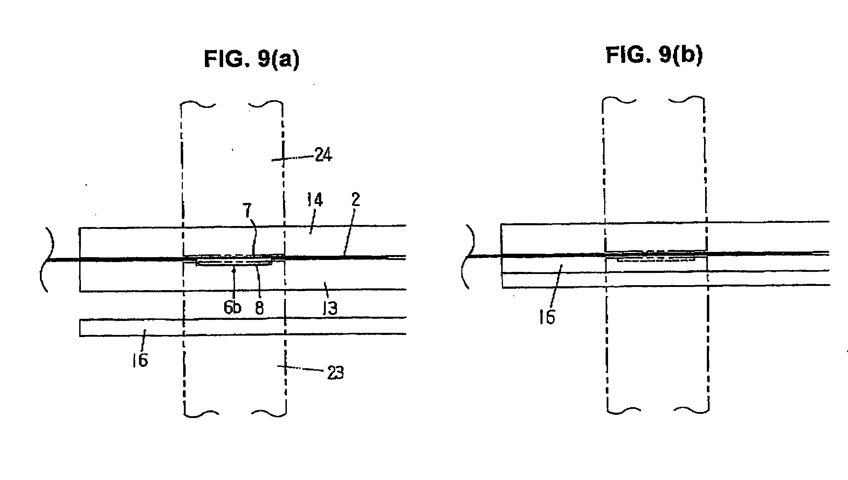

A gas charging method and apparatus of the present invention will be described below in more detail with reference to FIG. 1 FIG. 9(b).

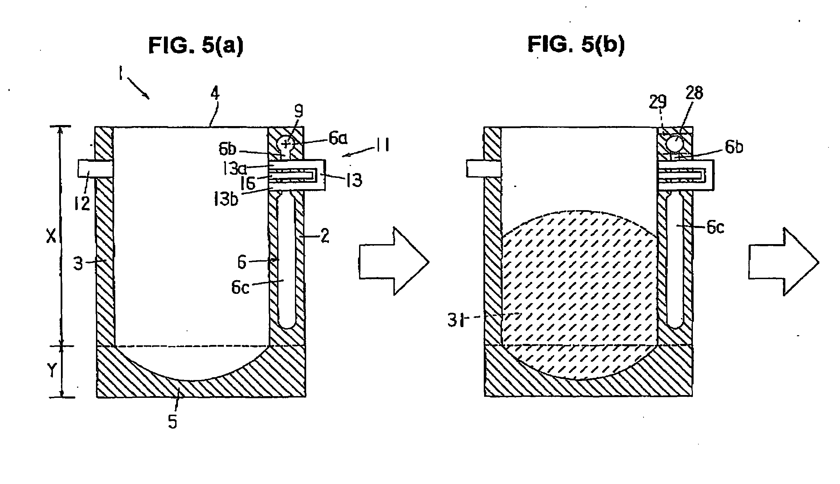

FIGs. 5(a) and 5(b) show a bag 1 that is equipped with a gas compartment portion 6. The bag 1 is a bottom-gusseted self-supporting bag that is made up of front and rear film sheets, as well as a folded bottom film sheet. In the upper region X of the bag 1, the front and rear film sheets of the bag 1 are bonded together along the two lateral side edges, thereby forming seal portions 2, 3. At the upper edge, the front and rear film sheets are not bonded together, creating an open bag mouth 4. In the lower region Y of the bag 1, the front and rear film sheets are bonded along the two lateral side edges, thereby sandwiching the film sheet of the bottom portion, and, in addition, are bonded on the inside, where the film sheet of the bottom portion itself is folded inward. In the central portion, the front and rear film sheets are respectively bonded to the film sheet of the bottom portion (the two sheets of film sheet of the bottom portion are not bonded), thereby forming a seal portion 5. The seal portions 2, 3, and 5 are indicated by oblique hatching in FIGs. 5(a) and 5(b).

An unbonded portion (unbonded gas compartment portion) 6, in which the front and rear film sheets are not bonded together, is formed in part of the seal portion 2.

The gas compartment portion 6 of the bag 1 is a portion where no pressure is applied and sealing does not take place when the front and rear film sheets 7, 8 (see FIG. 9(a)) are heat sealed. The gas compartment portion 6 has a closed, elongated, narrow outline that extends downwardly from the vicinity of the bag mouth 4 (upper edge of the seal portion 2) and has a cross-shaped incision (or a gas inlet) 9. The cross-shaped incision or gas inlet 9 places the interior of the gas compartment portion 6 in communication with the exterior of the bag I, and it is formed in each of the front and rear film sheets in the vicinity of its upper edges. A neck section 6b, which extends over a predetermined length from a round gas introduction section 6a, in which the gas inlet 9 is formed, is formed in the gas compartment portion 6, with its lower end forming a wide main section 6c.

A packaging method and apparatus (including the gas charging method and apparatus of the present invention), in which the bag 1 equipped with a gas compartment portion is used to manufacture product bags equipped with gas compartment portions by the rotary packaging apparatus, will be described below with reference to FIGs. 1 - 9(b).

In the same manner as in the rotary packaging apparatus depicted in Figure 5 of Japanese Patent No. 4,771,785, the rotary packaging apparatus illustrated in the FIG. 1 is comprised of multiple pairs of left and right bag-conveying grippers 11, 12 installed at regular intervals around an intermittently rotating table, so that the grippers clamp two lateral top edge areas of each of the supplied bags 1 equipped with gas compartment portions in a suspended state while intermittently conveying the bags along a circular bag conveying path. Subsequent to supplying the bag 1 equipped with a gas compartment portion to the grippers 11, 12, in each one of stop positions (in stop positions I - VIII), at which the grippers 11, 12 come to a stop, the bag 1 clamped by the grippers 11, 12 is subjected to successive packaging operations including, for instance, opening the mouth of the bag, filling it with the material to be packaged, sealing the mouth of the bag; and steps of the gas charging method, including a step of filling the gas compartment portion 6 with gas and a gas charging step which involves sealing the incisions 9 of the gas compartment portion 6 are also performed.

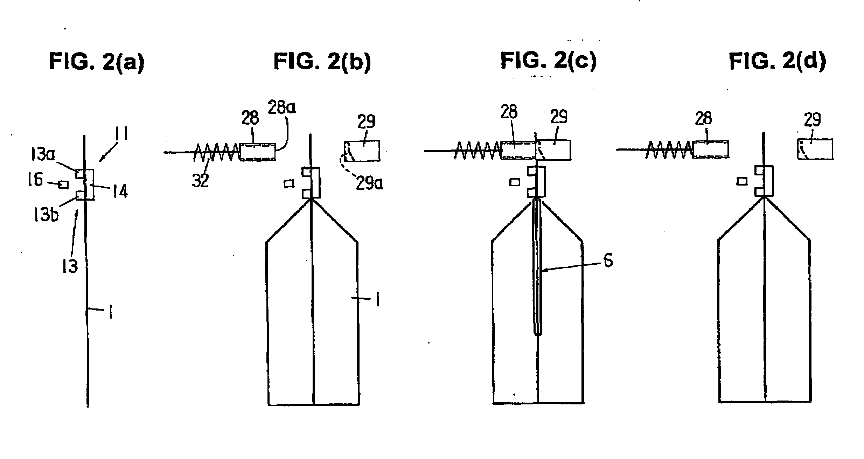

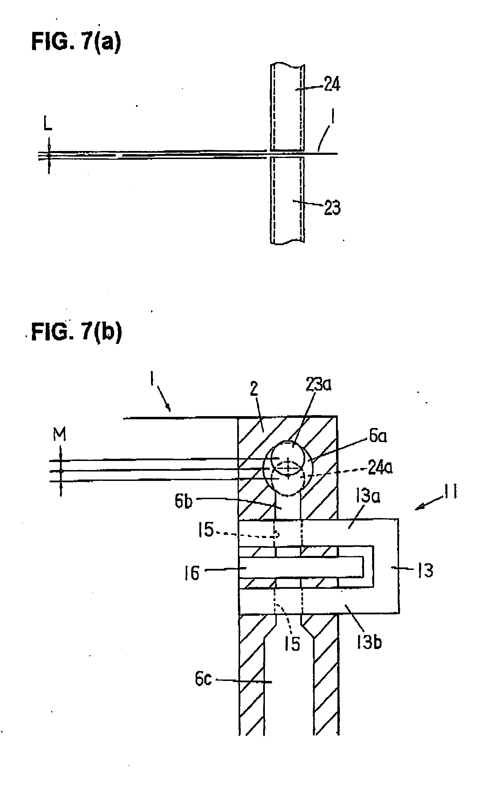

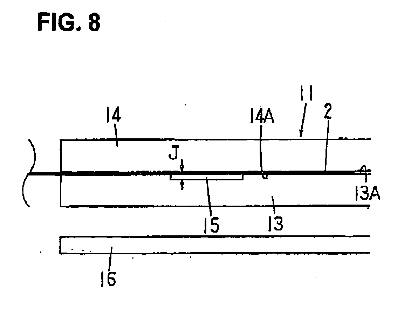

One gripper 11 of the pair of grippers 11, 12 has a pair of gripping elements 13,14 (see FIG. 2(a)). When viewed from the front, the outer gripping element 13, as seen from FIG. 5(a), appears to look substantially like a letter U turned on its side, and, on the other hand, when viewed from the front (or from the rear), the inner gripping element 14 appears to look substantially quadrangular (see FIG. 1), with its outline substantially matching the external shape of the gripping element 13. The gripper 11 uses the gripping element 14 and the top and bottom transverse portions 13a, 13b of the gripping element 13 to clamp the front and rear sides of the sealed side edge portion 2 of the bag, in which the gas compartment portion 6 is formed. As seen from FIG. 7(b) and FIG. 8, shallow grooves 15 extending in the vertical direction are formed in the clamping surfaces 13A of the top and bottom transverse portions 13a, 13b of the gripping element 13, while the clamping surface of the gripping element 14 has no grooves etc. and is substantially flat. The area clamped by the bag-conveying gripper 11 (comprising the gripping elements 13, 14) is a location where the neck section 6b is formed in the gas compartment portion 6 of the sealed portion 2, and also it is where the top and bottom transverse portions 13a, 13b of the gripping element 13 and the gripping element 14 horizontally go across the neck section 6b in the vicinity of the incision 9. When closed, however, the bag-conveying gripper 11 formed therein is in a position where the grooves 15 hold the neck section 6b, and a gap J between the two opposed faces of the gripping elements 13, 14 in the neck section 6b is wider than the thickness of the film sheets 7, 8 of the gas compartment portion 6 (see FIG. 8) by the depth of the grooves 15. In other words, even when the bag-conveying gripper 11 is closed, the gripping elements 13, 14 hold the neck section 6b with a predetermined gap J in between, and the neck section 6b is not clamped by the gripping elements 13, 14.

The seal portion 3 on the other side of the bag 1 from the seal portion 2 is clamped by a regular bag-conveying gripper 12 (same as gripper 8 of Japanese Patent No. 4,771,785).

For each pair of grippers 11, 12, as seen from FIG. 5(a), a gas blocking gripper 16 is provided, and it is installed to face the gripping element 14. The gas blocking gripper 16 moves together with the grippers 11, 12 and is opened and closed at predetermined timing. When the gas blocking gripper 16 is closed, the gas blocking gripper 16 enters the space between the top and bottom transverse portions 13a, 13b of the gripping element 13 and clamps the neck section 6b of the gas compartment portion 6 of the bag from the front and rear side between itself and the gripping element 14. In the present invention, the area of the neck section 6b that is clamped by the gas blocking gripper 16 and the gripping element 14 referred to as a "blockage region".

In the above-described rotary packaging apparatus, a conveyer magazine type bag-supplying device 17 is disposed in stop position 1 of the bag conveying path, a printer (only a head section 18 thereof is shown) is disposed in stop position II, a mouth-opening device (only suction cups 19 and an opening head 21 thereof are shown) is disposed in stop position III, a filling device (only a nozzle section 22 thereof is shown) is disposed in stop position IV, a gas injection device (only a pair of gas injection nozzles 23, 24 thereof are shown) is disposed in stop position VI, a sealing device (only a pair of hot plates 25, 25 thereof are shown) is disposed in stop position VII, and a cooling device (only a pair of cooling plates 26, 26 thereof are shown) is disposed in stop position VIII. Furthermore, a pre-heating device (only a heated gas-blowing nozzle 27 thereof is shown) is disposed in stop position IV, and a preliminary gas injection device (only a preliminary gas injection nozzle 28 and a receiving member 29 thereof are shown) is disposed in stop position V.

The packaging method that uses the rotary packaging apparatus illustrated in FIG. 1 is carried out in the following manner.
(1) In stop position I (bag-supplying station), a bag 1 equipped with a gas compartment portion is supplied to the grippers 11, 12 from the conveyer magazine type bag-supplying device 17, and the grippers 11, 12 clamp the front and rear sides of predetermined locations in the seal portions 2, 3 of the bag 1. When the bag 1 is thus clamped, the neck section 6b of the gas compartment portion 6 of the bag is clamped by the gripper 11. This state is illustrated in FIG. 2(a), FIG. 5(a), and FIG. 8. At such time, the gas blocking gripper 16 is open. As shown in FIG. 8, the gap J is, to match the groove 15 of the gripping element 13, formed between the clamping surfaces of the gripping elements 13, 14 that hold the neck section 6b of the gas compartment portion 6 of the bag 1.
(2) In stop position II (printing station), lettering is printed on the surface of the bag 1 using the printer.
(3) In stop position III (mouth opening station), the mouth of the bag1 is opened by the mouth-opening device. The two suction cups 19 of the mouth-opening device advance toward or retreat from the bag 1. When the suction cups 19 advance, they adhere to both sides of the bag 1, and then when they are retracted, the mouth of the bag is opened as a result. The opening head 21 of the mouth-opening device moves up and down above the bag 1, and when it goes down, its lower end enters the bag through the open mouth and discharges air into the bag.
(4) In stop position IV (material filling station), the bag is filled with, for instance, a liquid substance by the filling device (see the filled material 31 in FIG. 5(b)). The nozzle portion 22 of the filling device moves up and down above the bag 1 equipped with a gas compartment portion, and when it goes down, the nozzle portion 22 is inserted into the bag through the mouth of the bag and fills the bag with the liquid substance.
   In addition, in this stop position IV, a heated gas-blowing nozzle 27, which forms part of the pre-heating device, is installed in the vicinity of the bag conveying path of the bag 1, and a pre-heating step is carried out thereby to heat the gas compartment portion 6 of the bag 1. The heated gas-blowing nozzle 27 is connected to a fan and a heating source, and its blow opening is directed at the gas compartment portion 6 of the bag I that comes to a stop in stop position IV. The heated gas-blowing nozzle 27 discharges hot air (heated gas) to the gas compartment portion 6 of the bag 1 through the blow opening and heats the gas compartment portion 6, which is made mostly (or entirely) of thermoplastic resin film sheet, thereby softening the film sheet that forms the gas compartment portion 6. As a result, when compressed gas is blown into the gas compartment portion 6 during the preliminary gas injection step, to be performed thereafter, it is possible to release the adhesion of the film sheets forming the gas compartment portion 6 in a reliable manner. The pre-heating step can be carried out on an as-needed basis.
(5) In stop position V (preliminary gas injection station), a preliminary gas injection nozzle 28 and a receiving member 29, which form part of the preliminary gas injection device, are installed in the vicinity of the bag conveying path of the bag 1 equipped with a gas compartment portion, and a preliminary gas injection step is carried out thereby, so that gas is blown into the gas compartment portion 6 of bag 1. The preliminary gas injection nozzle 28 is connected to a pressurized gas supply source through a diverter valve and the like, not shown, and it advances towards or retracts from the bag 1. The discharge opening 28a at the distal end of the preliminary gas injection nozzle 28 is aligned with the incision (gas inlet) 9 of the bag when preliminary gas injection nozzle 28 is in the advanced position. The receiving member 29 is provided opposite the preliminary gas injection nozzle 28 so as to have the bag 1 between itself and the gas injection nozzle 28, and it advances towards or retracts from the bag 1. When the receiving member 29 advances, it supports the rear side of the bag 1 while facing the discharge opening 28a of the preliminary gas injection nozzle 28 with the bag 1 in between. In the distal end of the receiving member 29, as seen from FIG. 2(b), a recessed portion 29a is formed. The preliminary gas injection nozzle 28 is biased forward by a compression spring 32. The same device as the gas filling device described in Japanese Patent No. 4,771,785 can be used as the preliminary gas injection device described above, including the preliminary gas injection nozzle 28 and the receiving member 29.

When the bag 1 comes to a stop at this preliminary gas injection station in stop position V, as seen from FIG. 2(b), the preliminary gas injection nozzle 28 and the receiving member 29 retract and remain in their standby positions. Subsequently, as shown in FIG. 2(c) and FIG. 5(b), the preliminary gas injection nozzle 28 and the receiving member 29 advance in synchronism, so that the discharge opening 28a at the distal end of the preliminary gas injection nozzle 28 abuts the front side surface of the bag around the incision 9 while its rear side is supported by the receiving member 29. Then immediately thereafter, compressed gas (including air) is discharged from the distal end of the preliminary gas injection nozzle 28 and injected into the gas compartment portion 6 through the incision 9. Since, as described above, the neck section 6b of the gas compartment portion 6 is not clamped by the gripping elements 13, 14 of the bag-conveying gripper 11 (and is only held thereby, with a gap J provided in between), gas is channeled or flows into the lower body portion 6c through the neck section 6b. This process will be discussed in detail with reference to FIG. 8 when describing the gas filling step.

During the gas injection of this preliminary gas injection step, under the action of air pressure, the preliminary gas injection nozzle 28 slightly retracts against the bias of the compression spring 32. As a result, the gas introduction section 6a of the gas compartment portion 6 expands and creates a space between the front and rear film sheets 7, 8 that form the gas introduction section 6a, and the gas is injected into the gas compartment portion 6 through the incision 9 on the preliminary gas injection nozzle 28 side. In addition, due to the fact that the recessed portion 29a is formed at the distal end of the receiving member 29, the expansion (or inflation) of the above-described gas introduction section 6a takes place behind the incision 9, thereby enhancing the influx of gas through the incision 9.

If, during this preliminary gas injection step, the front and rear film sheets 7, 8 that form the gas compartment portion 6 are not firmly adhered to each other, the compressed gas entering the gas introduction section 6a of the gas compartment portion 6 through the incision 9 immediately enters the main section 6c via the neck section 6b and causes the entire gas compartment portion 6 to expand (or to inflate).

On the other hand, even if the front and rear film sheets 7, 8 that form the gas compartment portion 6 are entirely or partially firmly adhered to each other, the compressed gas discharged from the preliminary gas injection nozzle 28 enters the gas introduction section 6a of the gas compartment portion 6 through the incision 9 and separates and spreads apart the adhered front and rear film sheets 7, 8, thus causing the gas introduction section 6a to expand. Subsequently, the compressed gas enters the neck section 6b and separates and spreads apart the similarly adhered front and rear film sheets 7, 8 and causes the neck section 6b to expand, and furthermore, it enters the main section 6c and separates and spreads apart the likewise adhered front and rear film sheets 7, 8, causing the main section 6c to expand. The compressed gas thus releases the adhesion of the front and rear film sheets 7, 8 for the entire or most of the gas compartment portion 6.

Subsequently, as shown in FIG. 2 (d), the preliminary gas injection nozzle 28 and the receiving member 29 retract, and the injection of the compressed gas is stopped. The gas injected into the gas compartment portion 6 through the incision 9 immediately escapes out through the incision 9, and the previously expanded (inflated) gas compartment portion 6 shrinks and becomes as flat as before. The bag 1 in this state is then conveyed to the next stop position VI.
(6) In stop position VI (gas filling station), gas injection nozzles 23, 24 that form part of the gas injection device are installed in the vicinity of the bag conveying path of the bag 1 equipped with a gas compartment portion, and the gas filling step is carried out by the gas injection nozzles 23, 24 that inject gas (including air) into the gas compartment portion 6 of the bag 1, and then blocking fluid communication of gas between the incision 9 and the interior of the gas compartment portion 6 is made by the gas blocking gripper 16.

The gas injection nozzles 23, 24, which are connected to a pressurized gas supply source through a diverter valve and the like, not shown, advance toward or retreat from the bag 1, so that, in the advanced position, the discharge openings 23a, 24a at the distal ends of the gas injection nozzles 23, 24 are aligned with the incisions 9 on both sides of the bag 1.

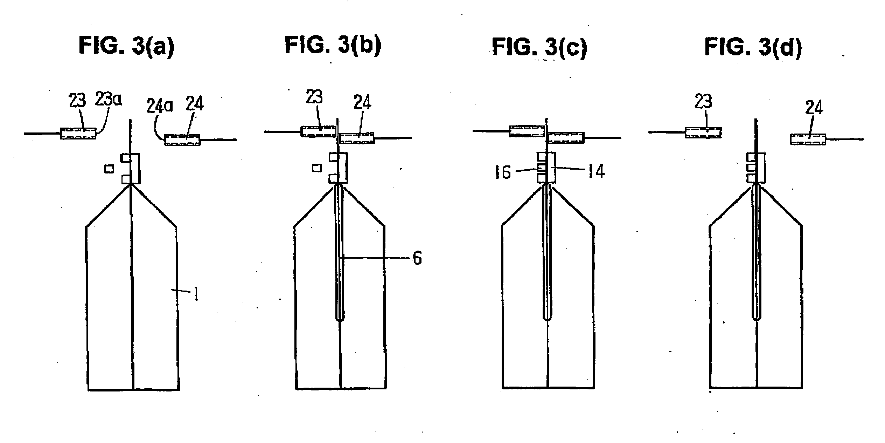

As shown in FIG. 3(a), when the bag 1 equipped with a gas compartment portion comes to a stop at the gas filling station, the gas injection nozzles 23, 24 are retract and remain in their standby positions. Subsequently, as shown in FIG. 3(b), both gas injection nozzles 23, 24 advance and are placed in the advanced position, so that the discharge openings 23a, 24a at the distal ends thereof are aligned with the incisions 9.

During this process, as shown in FIG. 7(a), a predetermined gap L, which is slightly greater than the thickness of the two film sheets 7, 8, is left between the two discharge openings 23a, 24a, and this gap L does not change until the gas injection nozzles 23, 24 retract from the advanced position. As a result of this gap L between the two discharge openings 23a, 24a, a gap is formed during the gas discharge between the film sheets 7, 8 of the gas introduction section 6a of the gas compartment portion 6, and gas enters the gas compartment portion 6 through this gap.

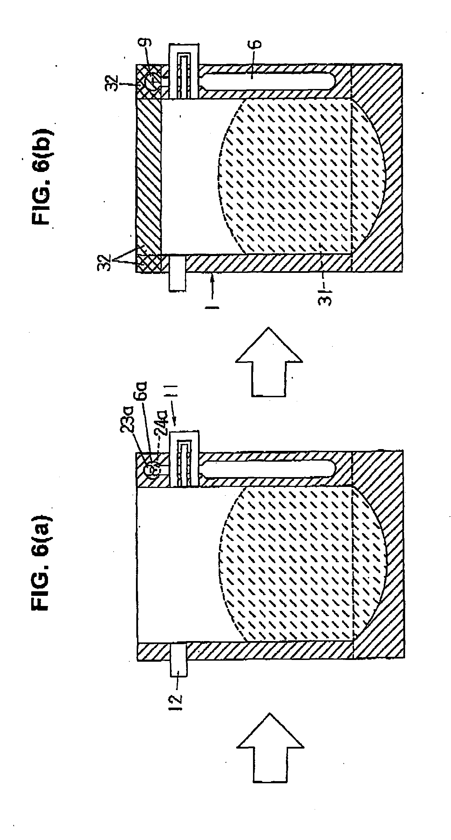

As shown in FIG. 6(a) and FIG. 7(b), the inner diameter of the discharge openings 23a, 24a of the gas injection nozzles 23, 24 is set to be smaller than the diameter of the gas introduction section 6a in which the incision 9 of the gas compartment portion 6 is formed. In this manner, making the inner diameter of the discharge openings 23a, 24a smaller than the diameter of the gas introduction section 6a (or its width, if the gas introduction section is not round), in which the incisions 9 are formed, makes it possible to concentrate the flow of gas discharged from the gas injection nozzles 23, 24 in the gas introduction section 6a, allowing the injection of gas to be done in a more efficient manner.

In addition, as shown in FIG. 3(b) and FIG. 7(b), when the gas injection nozzles 23, 24 are in the advanced position, the centers of the discharge openings 23a, 24a of the gas injection nozzles 23, 24 are displaced by equal distances from the centers of the incisions 9, with a total gap of M. As a result of this arrangement, it is possible to prevent positional problems from arising during gas injection even when the position of the bag 1 clamped by the grippers 11, 12 slightly deviates from the originally set position (the position illustrated in FIG. 7(b)) in the vertical direction or even when the position, where the incisions 9 are formed in the gas compartment portion 6, slightly deviates from the center of the gas introduction section 6a in the vertical direction.

When the gas injection nozzles 23, 24 advance and gas injection starts in their advanced position, compressed gas is injected into the gas introduction section 6a of the gas compartment portion 6 through the incisions 9 formed in both film sheets 7, 8, causing the gas introduction section 6a to expand. As a result, the film sheets 7, 8 adhere to the discharge openings 23a, 24a of the gas injection nozzles 23, 24, respectively, and a space is formed between the film sheets 7, 8 in the gas introduction section 6a, after which the compressed gas enters the neck section 6b and the main section 6c, and the entire gas compartment portion 6 thus expands (or inflate). Since the adhesion of the film sheets 7, 8 of the gas compartment portion 6 has already been released previously in the preliminary gas injection step, the gas injection and filling of the gas compartment portion in this gas filling step is carried out smoothly without problems.

As shown in FIG. 9(a), in the areas gripped by the gripping element 13 (or by the transverse portions 13a, 13b thereof) and the gripping element 14 in the gas compartment portion 6 (or in the neck section 6b) (these areas are hereinafter referred to as the "restriction regions") and in their vicinity, free expansion is impeded by the inner surfaces 13A, 14A of the gripping elements 13, 14 facing each other with the gap J in between, so that the expanded shape is restricted to a thin and flat configuration. The gas injected into the gas compartment portion 6 is channeled or flows downward through the space between the two film sheets 7, 8 in the restriction regions of the neck section 6b. In a very similar manner, during the preliminary gas injection step, the expanded shape of the restriction regions is also restricted to a thin and flat configuration.

Subsequently, as shown in FIG. 3(c) and FIG. 9(b), the gas blocking gripper 16 closes and clamps, in conjunction with the gripping element 14, the blockage region configured between the transverse portions 13a, 13b of the gripping element 13 (between the restriction regions) on both sides. As a result, the blockage region is completely compressed, and the fluid communication of gas between the incision 9 and the interior of the gas compartment portion 6 is blocked. Thereafter, the gas injection nozzles 23, 24 retract (FIG. 3 (d)), and the bag 1 is conveyed to the next stop position VII while being maintained in the blocked state.

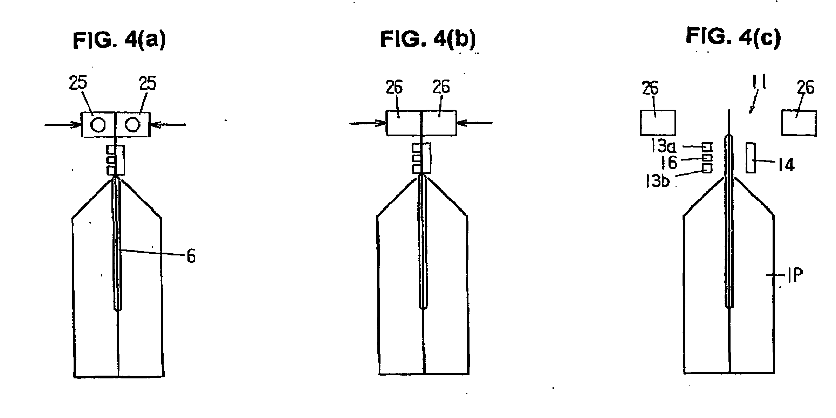

If the blockage region is significantly expanded (inflated) before the gas blocking gripper 16 is closed, sometimes, the film sheets 7, 8 are folded in when the gas blocking gripper 16 is closed, and as a result the blockage region cannot be completely compressed. However, the restriction regions affect the blockage region, causing its expanded shape to assume a thin and flat configuration. As a result, when the gas blocking gripper 16 is closed, the film sheets 7, 8 in the blockage region can be completely compressed into a flat configuration, and the fluid communication of gas can be reliably blocked.
(7) In stop position VII (gas charging station), a pair of hot plates 25, 25 forming part of the sealing device are provided in the vicinity of the bag conveying path of the bag 1 equipped with a gas compartment portion. In this stop position VII, a gas charging step which involves sealing the incisions 9 of the bag 1 is carried out, and simultaneously a mouth-sealing step which involves sealing the mouth of the bag 1 is carried out. When the bag 1 equipped with a gas compartment portion comes to a stop in this gas charging station, the hot plates 25, 25 that have been opened are closed, and as shown in FIG. 4(a) and FIG. 6(b) the film sheets 7, 8 of the front and rear surfaces of the bag 1 are clamped by the hot plates 25, 25 at the location of the incisions 9 and at the mouth of the bag on both sides, and they are sealed (heat-sealed) to form the seal portion 32. As a result, the gas is encapsulated in the gas compartment portion 6 of the bag 1, and at the same time the packaged material 31 is hermetically enclosed inside the bag 1. In this state, the bag 1 is then conveyed to stop position VIII.
(8) In stop position VIII (seal cooling and discharge station), a pair of cooling plates 26, 26 forming part of the cooling device are provided in the vicinity of the bag conveying path of the bag 1 equipped with a gas compartment portion. The cooling plates 26, 26 pressure-hold and cool, as shown in FIG. 4(b), the locations sealed in the previous step by pressing them on both front and rear sides. Subsequently, during this cooling process, the gas blocking gripper 16 and the bag-conveying grippers 11, 12 are opened, the cooling plates 26, 26 are opened as well (see FIG. 4(c)), and the bag 1 P equipped with gas compartment portion (which is now a product bag equipped with a gas compartment portion) falls onto the chute 33, which discharges the product bag out of the apparatus. The gas blocking gripper 16 can be designed so that it is opened at the point of process when the gas sealing step ends.

The present invention is described above in detail with reference to FIGs. 1 - 9(b), and the present invention can take other manners as described below:
(1) Although the foregoing description is made for the bag that has the incision 9 at the upper edge of the gas compartment portion 6, the bag can be formed with an opening (a type of gas inlet) instead of the incision 9.
(2) Although the foregoing description is made for the bag that has a neck section 6b formed in the gas compartment portion 6, the entire gas compartment portion 6 can be made to have the same width for its entire length (depth) as seen in the bag equipped with gas compartment portion described in Japanese Patent No. 4,771,785.
(3) The foregoing description is made for the bag-conveying grippers 11 that clamp the seal portion 2 in which the gas compartment portion 6 is formed, and the bag-conveying grippers 11 clamp the seal portion 2 across the gas compartment portion 6; however, the grippers can be adapted to clamp the outside of the gas compartment portion only as in the same manner as the bag-conveying grippers described in Japanese Patent No. 4,771,785.
(4) The foregoing description is made for the bag in which the blockage region is clamped between the gas blocking gripper 16 and the gripping element 14 of the bag-conveying gripper 11, and the gripping element 14 is used as a member that is on the other side of the gas blocking gripper 16. It is, however, possible to install an independent pair of gas blocking grippers in the same manner as the gas blocking grippers described in Japanese Patent No. 4,771,785.
(5) Although the foregoing description is made for the arrangement in which the restriction regions (areas held by the top and bottom transverse portions 13a, 13b of the gripping element 13 of the bag-conveying gripper 11) are provided above and below the blockage region clamped by the gas blocking gripper 16, the restriction region can be provided only at a single location.
(6) The foregoing description is made for the gas injection means in which the preliminary gas injection nozzle 28 and the receiving member 29 are used in the preliminary gas injection step and the pair of gas injection nozzles 23, 24 are used in the gas filling step; however, this arrangement can be made other way around, and also the same gas injection means can be employed in both steps. When the preliminary gas injection nozzle 28 and the receiving member 29 are used as a gas injection means in both preliminary gas injection step and gas filling step, the gas inlet can be formed in one of the front and rear film sheets (or in the film sheet to which the gas injection nozzle 28 faces).
(7) Although the preliminary gas injection step, the gas filling step, and the gas charging step are performed after the filling step for the material to be packaged, these steps can be performed before the material filling step.
   In addition, although the foregoing description is made for the gas charging method and apparatus configured as part of a packaging method and apparatus, they can be separated from the opening of the mouth of the bag and its filling with the material to be packaged and configured as a separate gas charging method and gas charging apparatus.
(8) The foregoing description is made for the gas charging method and apparatus of the present invention in which bags equipped with gas compartment portions are conveyed intermittently; however, the present invention can be applied also to a case in which bags equipped with gas compartment portions are conveyed in a continuous manner at a constant speed (for example, see Japanese Patent Application Laid-Open (Kokai) No. 2009-161230). If the bags equipped with gas compartment portions are moved in a continuous manner, then, for example, the gas blocking grippers are moved continuously together with the bags, and components such as the gas injection nozzles, preliminary gas injection nozzles, heated gas-blowing nozzles, hot plates and the like are moved back after having been moved along with the bag for a predetermined distance and carry out their own processing while being moved with the bag.

## Claims

1. A method for charging a bag (1) equipped with a gas compartment portion (6) with gas,
wherein said method is for a bag (1) formed integrally therein with a gas compartment portion (6) extending in a longitudinal direction in a sealed side edge portion of the bag and having a gas inlet (9) that is formed in a film sheet constituting the gas compartment portion (6) and places an exterior of the bag (1) in communication with an interior of the gas compartment portion (6), and said bag (1) is conveyed along a predetermined bag conveying path,
wherein said method, while the bag (1) is on the bag conveying path, carries out a gas filling step and subsequently a gas charging step, in which:
in the gas filling step, a discharge outlet of a gas injection nozzle (23,24) connected to a pressurized gas supply source is aligned with the gas inlet (9), gas is injected from the gas injection nozzle (23, 24) into the gas compartment portion (6) through the gas inlet (9), and, while the injection is in progress, a blockage region configured in the vicinity of the gas inlet (9) is gripped by a gas blocking gripper (16) on both sides of the bag (1) to block fluid communication of gas between the gas inlet (9) and the interior of the gas compartment portion (6); and
in the gas charging step, the bag (1), with the blockage region being clamped by the gas blocking gripper (16), is pressure-held on both sides at a location of the gas inlet (9) or at a location in the vicinity of the gas inlet (9) with hot plates (25) to thereby seal the gas inlet or an area in the vicinity of the gas inlet (9) and encapsulate the gas in the gas compartment portion (6), and **characterised in that** prior to the gas filling step, said method carries out a preliminary gas injection step that, while the bag (1) is being on the bag conveying path, aligns a discharge outlet (28a) of another gas injection nozzle (28) connected to a pressurized gas supply source with the gas inlet (9) and injects gas from the other gas injection nozzle (28) into the gas compartment portion (6) through the gas inlet (9).

2. The method for charging a bag equipped with a gas compartment portion with gas according to claim 1, wherein
said bag (1) formed integrally therein with a gas compartment portion (6) is intermittently conveyed along said bag conveying path,
said method carries out said gas filling step in a predetermined stop position (VI) along the bag conveying path and subsequently said gas charging step in a downstream stop position (VII) along the bag conveying path,
the bag (1), with the blockage region being clamped by the gas blocking gripper (16) is conveyed from said stop position (VI) where said gas filling step is carried out to the downstream stop position (VII)-where said gas charging step is carried out, and
in a stop position (V) upstream of the stop position (VI) where said gas filling step is carried out, said preliminary gas injection step is carried out.

3. The method for charging a bag (1) equipped with a gas compartment portion (6) with gas according to Claim 1 or 2, wherein a pre-heating step, during which heated gas is discharged to the gas compartment portion (6) of the bag (1) on the bag conveying path, is carried out before performing the preliminary gas injection step.

4. An apparatus for charging a bag (1) equipped with a gas compartment portion (6) with gas, said apparatus being for a bag (1) integrally formed therein with a gas compartment portion (6) extending in a longitudinal direction in a sealed side edge portion (2, 3) of the bag and having a gas inlet (9) which is formed in a film sheet that constitutes the gas compartment portion (6) and places an exterior of the bag (19 in communication with an interior of the gas compartment portion (6), and said bag (1) being intermittently conveyed along a predetermined bag conveying path and, while being conveyed, the gas compartment portion (6) of the bag is charged with gas,
wherein said apparatus comprises:
a plurality of pairs of bag-conveying grippers (11, 12) that clamp two lateral edges of a bag (1) equipped with a compartment portion (6) and move the bag in an intermittent manner, so that the bag (1) is intermittently conveyed along the bag conveying path;
a gas injection nozzle (23, 24) that is connected to a pressurized gas supply source, is provided in the vicinity of a predetermined stop position (VI) along the bag conveying path, and advances toward or retracts from the bag (1), so that a discharge opening at a distal thereof end is aligned with the gas inlet in the advanced position to inject gas through the gas inlet into the gas compartment portion (6);
a gas blocking gripper (16) which is installed in conjunction with the bag-conveying grippers (11, 12) and moved in synchronism with the bag-conveying grippers (11, 12) and, while the injection of the gas by the gas injection nozzle (23, 24) is in progress, said gas blocking gripper (16) clamps a blockage region, which is configured in the vicinity of the gas inlet (9), on both sides of the bag to block fluid communication of gas between the gas inlet (9) and the interior of the gas compartment portion (6); and
a pair of hot plates (25, 25) provided in the vicinity of a stop position (VII) downstream of the gas injection nozzle (23, 24) along the bag conveying path, said hot plates (25, 25) clamping the bag (1) on both sides in a location of the gas inlet (9) or a location in the vicinity of the gas inlet (9) and sealing the gas inlet or an area in the vicinity of the gas inlet (9), thus encapsulating the gas in the gas compartment portion (6); **characterised in that**
a preliminary gas injection nozzle (28) that is connected to a pressurized gas supply source, is provided in the vicinity of a stop position (V) upstream of the gas injection nozzle(23, 24) on the bag conveying path and advances toward or retracts from the bag (1) equipped with a gas compartment portion (6), so that a discharge opening (28a) at a distal end of the preliminary gas injection nozzle (28) is aligned with the gas inlet (9) in an advanced position thereof, and gas is injected through the gas inlet (9) into the gas compartment portion (6) of the bag (1).

5. The apparatus for charging a bag (1) equipped with a gas compartment portion (6) with gas according to Claim 4, further comprising a heated gas blowing nozzle (27) which is provided in the vicinity of a stop position (IV) upstream of the preliminary gas injection nozzle (28) on the bag conveying path and discharges heated gas to the gas compartment portion (6) of the bag (1).

## Patentansprüche

1. Gaszuführungsverfahren für einen Beutel (1) mit Gasraumabschnitt (6),
wobei das Verfahren für einen Beutel (1) ist, welcher mit einem integrierten Gasraumabschnitt (6) ausgebildet ist, der sich in einem versiegelten Seitenrandabschnitt des Beutels in einer Längsrichtung erstreckt und einen Gaseinlass (9) aufweist, der in einer Dünnschichtfolie ausgeformt ist, aus der der Gasraumabschnitt (6) ausgebildet ist, und eine Außenseite des Beutels (1) mit einer Innenseite des Gasraumabschnitts (6) in Verbindung setzt, und der Beutel (1) entlang einem vorgegebenen Beutelförderweg befördert wird,
wobei in dem Verfahren, während sich der Beutel (1) auf dem Beutelförderweg befindet, ein Gasbefüllungsschritt und anschließend ein Gasbeladungsschritt durchgeführt wird, wobei:
in dem Gasbefüllungsschritt eine Auslassöffnung einer Gasinjektionsdüse (23, 24), die mit einer unter Druck stehenden Gasvorratsquelle verbunden ist, mit dem Gaseinlass (9) ausgerichtet ist, Gas aus der Gasinjektionsdüse (23, 24) durch den Gaseinlass (9) in den Gasraumabschnitt (6) injiziert wird und während der Injektion eine Blockierzone, die in der Nähe des Gaseinlasses (9) konfiguriert ist, auf beiden Seiten des Beutels (1) von einem Gasblockiergreifer (16) gegriffen wird, um eine Fluiddurchlass von Gas zwischen dem Gaseinlass (9) und dem Inneren des Gasraumabschnitts (6) zu blockieren; und
in dem Gasbeladungsschritt der Beutel (1), während die Blockierzone durch den Gasblockiergreifer (16) abgeklemmt ist, mit Heizelementen (25) auf beiden Seiten mit Druck an einer Stelle des Gaseinlasses (9) oder an einer Stelle in der Nähe des Gaseinlasses (9) gehalten wird, um dadurch den Gaseinlass oder einen Bereich in der Nähe des Gaseinlasses (9) zu versiegeln und das Gas in dem Gasraumabschnitt (6) einzukapseln, und **dadurch gekennzeichnet, dass** in dem Verfahren vor dem Gasbefüllungsschritt, ein Gasvorinjektionsschritt durchgeführt wird, wobei, während sich der Beutel (1) auf dem Beutelförderweg befindet, eine Auslassöffnung (28a) einer anderen Gasinjektionsdüse (28), die mit einer unter Druck stehenden Gasvorratsquelle verbunden ist, mit dem Gaseinlass (9) in Ausrichtung gebracht wird und Gas aus der anderen Gasinjektionsdüse (28) durch den Gaseinlass (9) in den Gasraumabschnitt (6) injiziert wird.

2. Gaszuführungsverfahren für einen Beutel mit Gasraumabschnitt nach Anspruch 1, wobei
der Beutel (1), der mit einem integrierten Gasraumabschnitt (6) ausgebildet ist, stoßweise entlang dem Förderweg befördert wird,
in dem Verfahren der Gasbefüllungsschritt in einer vorgegebenen Stoppposition (VI) entlang dem Beutelförderweg und anschließend der Gaszuführungsschritt in einer nachfolgenden Stoppposition (VII) entlang dem Beutelförderweg durchgeführt wird,
der Beutel (1), während die Blockierzone durch den Gasblockiergreifer (16) abgeklemmt ist, von der Stoppposition (VI), wo der Gasbefüllungsschritt durchgeführt wird, zu der nachfolgenden Stoppposition (VII) befördert wird, wo der Gasbeladungsschritt durchgeführt wird, und
in einer Stoppposition (V), die vor der Stoppposition (VI) vorgesehen ist, wo der Gasbefüllungsschritt durchgeführt wird, der Gasvorinjektionsschritt durchgeführt wird.

3. Gaszuführungsverfahren für einen Beutel mit Gasraumabschnitt nach Anspruch 1 oder 2, wobei vor dem Durchführen des Gasvorinjektionsschritts ein Vorwärmschritt durchgeführt wird, während dessen erwärmtes Gas auf dem Beutelförderweg in den Gasraumabschnitt (6) des Beutels (1) ausgelassen wird.

4. Gaszuführungsvorrichtung für einen Beutel (1) mit Gasraumabschnitt (6), wobei die Vorrichtung für einen Beutel (1) ist, welcher mit einem integrierten Gasraumabschnitt (6) ausgebildet ist, der sich in einem versiegelten Seitenrandabschnitt (2, 3) des Beutels in einer Längsrichtung erstreckt und einen Gaseinlass (9) aufweist, der in einer Dünnschichtfolie ausgeformt ist, aus der der Gasraumabschnitt (6) ausgebildet ist, und eine Außenseite des Beutels (1) mit einer Innenseite des Gasraumabschnitts (6) in Verbindung setzt, und der Beutel (1) stoßweise entlang einem vorgegebenen Beutelförderweg befördert wird und, während er befördert wird, der Gasraumabschnitt (6) des Beutels mit Gas beladen wird,
wobei die Vorrichtung aufweist:
mehrere Paare von Beutelfördergreifern (11, 12), welche zwei seitliche Ränder eines Beutels (1) mit einem Gasraumabschnitt (6) einklemmen und den Beutel stoßweise bewegen, so dass der Beutel (1) stoßweise entlang dem Beutelförderweg befördert wird;
eine Gasinjektionsdüse (23, 24), welche mit einer unter Druck stehenden Gasvorratsquelle verbunden ist, in der Nähe einer vorgegebenen Stoppposition (VI) entlang dem Beutelförderweg vorgesehen ist und sich auf den Beutel (1) zubewegt oder von diesem wegbewegt, so dass in der auf ihn zubewegten Position eine Auslassöffnung an einem distalen Ende davon mit dem ausgerichtet ist, um Gas durch den Gaseinlass in den Gasraumabschnitt (6) zu injizieren;
einen Gasblockiergreifer (16), welcher in Verbindung mit den Beutelfördergreifern (11, 12) eingebaut ist und synchron mit den Beutelfördergreifern (11, 12) bewegt wird, und während der Injektion des Gases durch die Gasinjektionsdüse (23, 24) der Gasblockiergreifer (16) auf beiden Seiten des Beutels eine Blockierzone abklemmt, welche in der Nähe des Gaseinlasses (9) konfiguriert ist, um einen Fluiddurchlass von Gas zwischen dem Gaseinlass (9) und dem Inneren des Gasraumabschnitts (6) zu blockieren; und
ein Paar Heizplatten (25, 25), welche in der Nähe einer Stoppposition (VII) vorgesehen sind, die entlang dem Beutelförderweg der Gasinjektionsdüse (23, 24) nachgeschaltet sind, wobei die Heizplatten (25, 25) den Beutel (1) auf beiden Seiten an einer Stelle des Gaseinlasses (9) oder einer Stelle in der Nähe des Gaseinlasses (9) abklemmen und den Gaseinlass oder einen Bereich in der Nähe des Gaseinlasses (9) versiegeln, wodurch das Gas in dem Gasraumabschnitt (6) eingekapselt wird; **dadurch gekennzeichnet,**
**dass** eine Gasvorinjektionsdüse (28), welche mit einer unter Druck stehenden Gasvorratsquelle verbunden ist, in der Nähe einer Stoppposition (V) vorgesehen ist, die auf dem Beutelförderweg vor der Gasinjektionsdüse (23, 24) angeordnet ist und sich auf den Beutel (1) mit Gasraumabschnitt (6) zu oder von diesem weg bewegt, so dass in einer darauf zubewegten Position eine Auslassöffnung (28a) an einem distalen Ende der Gasvorinjektionsdüse (28) mit dem Gaseinlass (9) in Ausrichtung gebracht ist und Gas durch den Gaseinlass (9) in den Gasraumabschnitt (6) des Beutels (1) injiziert wird.

5. Gaszuführungsvorrichtung für einen Beutel mit Gasraumabschnitt nach Anspruch 4,
ferner eine Düse (27) zum Ausstoßen von erwärmtem Gas aufweisend, welche in der Nähe einer Stoppposition (IV) vorgesehen ist, die auf dem Beutelförderweg vor der Gasvorinjektionsdüse (28) angeordnet ist und erwärmtes Gas in den Gasraumabschnitt (6) des Beutels (1) auslässt.

## Revendications

1. Procédé de chargement en gaz d'un sac (1) équipé d'un compartiment à gaz (6),
où ledit procédé est destiné à un sac (1), dont un compartiment à gaz (6) fait partie intégrante, s'étendant dans une direction longitudinale dans une partie du bord du côté étanche du sac et ayant une entrée de gaz (9) qui est formée dans une feuille de film formant le compartiment à gaz (6), et qui place l'extérieur du sac (1) en communication avec l'intérieur du compartiment à gaz (6), et ledit sac (1) est transporté le long d'un parcours de transport du sac préétabli,
où ledit procédé, pendant que le sac (1) se trouve sur le parcours de transport du sac, réalise une étape de remplissage en gaz et ensuite une étape de chargement en gaz, dans lequel :
dans l'étape de remplissage en gaz, une sortie de décharge d'une buse (23, 24) d'injection de gaz reliée à une source d'alimentation en gaz sous pression est alignée avec l'entrée de gaz (9), le gaz est introduit à partir de la buse (23, 24) d'injection de gaz dans le compartiment à gaz (6) par l'entrée de gaz (9), et, pendant que l'introduction se réalise, une zone de blocage configurée au voisinage de l'entrée de gaz (9) est saisie avec une pince de blocage de gaz (16) sur les deux côtés du sac (1) pour bloquer la communication du fluide gazeux entre l'entrée de gaz (9) et l'intérieur du compartiment à gaz (6); et
dans l'étape de chargement en gaz, le sac (1), avec la zone de blocage serrée par la pince de blocage de gaz (16), est gardé en pression sur les deux côtés à l'emplacement de l'entrée de gaz (9) ou au niveau du voisinage de l'entrée de gaz (9) avec des plaques chauffantes (25) afin de rendre l'entrée du gaz ou une zone au voisinage de l'entrée de gaz (9) étanches et d'enfermer le gaz dans le compartiment à gaz (6), et **caractérisé en ce que** préalablement à l'étape de remplissage en gaz, ledit procédé réalise un étape préliminaire d'injection de gaz qui, pendant que le sac (1) est sur le parcours de transport du sac, aligne une sortie de décharge (28a) d'une autre buse (28) d'injection de gaz reliée à une source délivrant du gaz sous pression avec l'entrée de gaz (9) et injecte le gaz en provenance de l'autre buse (28) d'injection de gaz dans le compartiment à gaz (6) par l'entrée de gaz (9).

2. Procédé de chargement en gaz d'un sac équipé avec un compartiment à gaz selon la revendication 1, dans lequel
ledit sac (1), dont un compartiment à gaz (6) fait partie intégrante, est transporté de façon intermittente le long dudit parcours de transport du sac,
ledit procédé réalise ladite étape de remplissage en gaz à une position d'arrêt prédéterminée (VI) le long du parcours de transport du sac et ensuite ladite étape de chargement en gaz à une position d'arrêt en aval (VII) le long du parcours de transport du sac,
le sac (1), avec la zone de blocage serrée avec la pince (16) de blocage du gaz est transporté à partir de ladite position d'arrêt (VI) où ladite étape de remplissage en gaz est réalisée vers la position d'arrêt en aval (VII), où ladite étape de chargement en gaz est réalisée, et
à une position d'arrêt en amont (V) de la position d'arrêt (VI) où ladite étape de remplissage est réalisée, ladite étape préliminaire d'injection de gaz est réalisée.

3. Procédé de chargement en gaz d'un sac (1) équipé d'un compartiment à gaz (6) selon les revendications 1 ou 2, dans lequel une étape de préchauffage, au cours de laquelle le gaz chauffé est déchargé dans le compartiment à gaz (6) du sac (1) sur le parcours de transport du sac, est réalisée avant d'effectuer l'étape préliminaire d'injection du gaz.

4. Dispositif de chargement en gaz d'un sac (1) équipé d'un compartiment à gaz (6), ledit dispositif étant destiné à un sac (1) dont un compartiment à gaz (6) fait partie intégrante s'étendant dans une direction longitudinale dans une partie du bord du côté étanche du sac (2, 3) et ayant une entrée de gaz (9) qui est formée dans une feuille de film qui constitue le compartiment à gaz (6) et qui place l'extérieur du sac (19) en communication avec l'intérieur du compartiment à gaz (6), et ledit sac (1) étant convoyé de façon intermittente le long d'un parcours de transport du sac prédéterminé et, pendant que le convoyage est effectué, le compartiment à gaz (6) du sac est chargé avec le gaz,
où ledit dispositif comprend :
une pluralité de paires de pinces (11, 12) pour le transport du sac qui serrent les deux bords latéraux du sac (1) équipé d'un compartiment (6) et qui déplacent le sac de façon intermittente, de sorte que le sac (1) est transporté de manière intermittente le long du parcours de transport du sac ;
une buse (23, 24) d'injection de gaz qui est reliée à une source d'alimentation en gaz sous pression, est fournie au voisinage de la position d'arrêt prédéterminée (VI) le long du parcours de transport du sac, et avance vers le sac (1) ou se met en retrait, de sorte qu'une ouverture de décharge à une extrémité distale de celle-ci est alignée avec l'entrée de gaz dans la position avancée pour injecter le gaz par l'entrée de gaz dans le compartiment à gaz (6) ;
une pince (16) de blocage du gaz qui est installée conjointement avec les pinces de transport du sac (11, 12) et qui se déplace de manière
synchronisée avec les pinces de transport du sac (11, 12) et, pendant que l'introduction du gaz par la buse (23, 34) d'injection du gaz se réalise, ladite pince (16) de blocage du gaz serre une zone de blocage, qui est configurée au voisinage de l'entrée de gaz (9), sur les deux côtés du sac pour bloquer la communication du fluide gazeux entre l'entrée de gaz (9) et l'intérieur du compartiment à gaz (6) ; et
une paire de plaques chaudes (25, 25) fournies au voisinage de la position d'arrêt en aval (VII) de la buse (23, 24) d'injection du gaz le long du parcours de transport du sac, lesdites plaques chaudes (25, 25) enserrant les deux côtés du sac (1) à l'emplacement de l'entrée de gaz (9) ou au niveau du voisinage de l'entrée de gaz (9), enfermant ainsi le gaz dans le compartiment à gaz (6) ; **caractérisé en ce**
**qu'**une buse (28) d'introduction préliminaire de gaz, qui est reliée à une source d'alimentation en gaz sous pression, est fournie au voisinage de la position d'arrêt (V) en amont de la buse (23, 24) d'introduction du gaz sur le parcours de transport du sac et avance le sac vers ou se met en retrait du sac (1) équipé avec un compartiment à gaz (6), de telle sorte qu'une ouverture de décharge (28a) à une extrémité distale de la buse (28) d'injection préliminaire du gaz est alignée avec l'entrée de gaz (9) dans une position avancée de celle-ci, et le gaz est injecté par l'entrée de gaz (9) dans le compartiment à gaz (6) du sac (1).

5. Dispositif de chargement d'un sac (1) équipé avec un compartiment à gaz (6) selon la revendication 4, comprenant en outre une buse (27) soufflant du gaz chauffé qui est fournie au voisinage de la position d'arrêt (IV) en amont de la buse (28) d'injection préliminaire de gaz sur le parcours de transport du sac et décharge le gaz chauffé dans le compartiment à gaz (6) du sac (1).
